# DEMANDE DE BREVET EUROPEEN

(11) **EP 3 257 642 A1**
(43) Date de publication de la demande: **20.12.2017**
(21) Numéro de dépôt: 17175102.7
(22) Date de dépôt: 08.06.2017
(51) Int. Cl.: B28B 1/00, B29C 64/214, B29C 64/205, B33Y 10/00, B33Y 30/00

(54) **PROCEDE ET MACHINE DE FABRICATION DE PIECES PAR LA TECHNIQUE DE FABRICATION ADDITIVE PAR VOIE PATEUSE**

(30) Priorité: 14.06.2016 FR 1655464
(71) Demandeur: Universite de Limoges, 87032 Limoges Cedex 01 (FR); Centre National de la Recherche Scientifique, 75794 Paris Cedex 16 (FR); 3Dceram, 87280 Limoges (FR)
(72) Inventeur: PATELOUP, Vincent, 87130 Chateauneuf la forêt (FR); CHARTIER, Victor, 87000 Limoges (FR); CHAPUT, Christophe, 87410 Le Palais sur Vienne (FR)
(74) Mandataire: Cabinet Chaillot

(57) **Abrégé**

La présente demande concerne un procédé de fabrication d'une pièce crue en matériau céramique par la technique des procédés additifs suivant laquelle des couches d'une pâte photodurcissable sont amenées successivement à durcir par irradiation selon un motif défini pour chaque couche, la première couche étant formée sur une surface de travail (3) sur un plateau de travail (4), chaque couche étant, avant son durcissement, étalée par raclage à partir d'une masse de pâte (2) amenée sur ledit plateau de travail (4), lequel est abaissé à chaque formation de couche. Lors de l'étalement d'au moins l'une des couches de pâte photodurcissable, on amène au moins une lame de raclage en position de travail, en plus de son mouvement de raclage (8) ou mouvement dit de passe, à se déplacer en va-et-vient dans son plan, selon un mouvement dit de vibration.

## Description

La présente invention concerne un procédé et une machine de fabrication de pièces par des procédés additifs.

Ces pièces sont notamment des pièces crues en matériau céramique destinées à être soumises à des opérations de nettoyage, déliantage et frittage pour obtenir des pièces céramiques finies.

La technique des procédés additifs, également appelée stéréolithographie, comprend généralement les étapes suivantes, pour l'obtention de telles pièces crues :
- on construit, par conception assistée par ordinateur, un modèle informatique de la pièce à fabriquer, modèle dont les dimensions sont plus grandes que celles de la pièce à fabriquer afin de prévoir un retrait de la céramique au cours de la fabrication de la pièce ; et
- on fabrique la pièce par la technique des procédés additifs, technique selon laquelle :
   - on forme, sur un support rigide ou sur une pièce en cours de fabrication, une première couche d'une composition photodurcissable comprenant généralement au moins une matière céramique, au moins un dispersant, au moins un monomère et/ou oligomère photodurcissable, au moins un photoinitiateur et au moins un plastifiant ;
   - on fait durcir la première couche de la composition photodurcissable, par irradiation selon un motif défini à partir du modèle pour ladite couche, formant un premier étage ;
   - on forme, sur le premier étage, une seconde couche de la composition photodurcissable ;
   - on fait durcir la seconde couche de la composition photodurcissable, par irradiation selon un motif défini pour ladite couche, formant un deuxième étage, cette irradiation s'effectuant par balayage laser de la surface libre de la composition photodurcissable étalée ou par un système de projection à diodes ;
   - optionnellement, on répète les étapes ci-dessus pour obtenir la pièce à l'état cru.

La présente invention concerne les procédés additifs dans lesquels la composition photodurcissable se présente sous la forme d'une pâte dont la composition est indiquée ci-dessus et dont la viscosité peut varier notamment de 1 Pa.s à l'infini pour un taux de cisaillement nul.

Dans une fabrication par voie pâteuse, le support rigide est un plateau de travail supportant les différentes couches de la pièce en cours de construction ainsi que la pâte et l'on forme chacune des couches par abaissement du plateau de travail et étalement d'une épaisseur de pâte prédéfinie. Une réserve de pâte est stockée dans des réservoirs qui sont automatiquement vidés d'une quantité de pâte prédéfinie à chaque couche à l'aide d'un piston. Cela crée un bourrelet de pâte à étaler sur la couche supérieure de la pièce en cours de fabrication qui aura été abaissée auparavant par le plateau de travail.

Chaque couche est étalée par raclage par une lame de raclage qui balaye la surface de travail du plateau de travail, par exemple en avançant suivant une direction horizontale rectiligne.

Dans ces conditions, il apparaît des couches irrégulières et non homogènes en termes d'épaisseur, laquelle va de quelques dizaines de microns à plusieurs millimètres. En conséquence, la pièce ne présentera pas un bon aspect extérieur et des contraintes internes indésirées peuvent apparaître en son sein, si bien que les pièces fabriquées doivent être mises au rebut.

De plus, des efforts de raclage importants peuvent être engendrés, lors de la phase de construction par couches, si bien que les pièces se brisent pendant leur construction.

Le brevet américain US5902537 décrit un dispositif de raclage à base de rouleaux, permettant d'étaler la pâte pour homogénéiser l'épaisseur des couches. Ce dispositif n'est pas adapté à des compositions visqueuses et s'avère peu pratique en utilisation, du fait de la difficulté à le nettoyer après utilisation.

La présente invention a pour but de remédier à ces inconvénients, à savoir d'améliorer l'homogénéité de chaque couche de pâte étalée, d'éviter des efforts de raclage trop importants qui peuvent détruire les pièces en construction, et de rendre plus aisé le nettoyage du dispositif de raclage.

A cet effet, il est prévu, selon l'invention, que l'étalement uniforme de la pâte est assuré par la combinaison du mouvement de balayage ou mouvement de passe horizontal de la lame, lequel assure de façon classique le raclage, avec un mouvement oscillant ou mouvement de vibration horizontal et orthogonal au précédent et dans le plan de construction de la couche. Les oscillations permettent d'animer au moins la partie supérieure de la couche à étaler d'une vitesse de cisaillement suffisamment importante pour fluidifier la pâte de comportement rhéofluidifiant à étaler et ainsi réduire considérablement les efforts de raclage.

La présente invention a donc pour objet un procédé de fabrication d'une pièce crue en matériau céramique par la technique des procédés additifs suivant laquelle des couches d'une pâte photodurcissable sont amenées successivement à durcir par irradiation selon un motif défini pour chaque couche, la première couche étant formée sur une surface de travail sur un plateau de travail, chaque couche étant, avant son durcissement selon le motif défini, étalée par raclage à partir d'une masse de pâte amenée sur ledit plateau de travail, lequel est abaissé à chaque formation de couche, caractérisé par le fait que, lors de l'étalement d'au moins l'une des couches de pâte photodurcissable, on amène au moins une lame de raclage en position de travail, en plus de son mouvement de raclage ou mouvement dit de passe, à se déplacer en va-et-vient dans son plan, selon un mouvement dit de vibration horizontal et orthogonal au précédent.

Dans un premier mode de réalisation, on peut conduire le mouvement de passe en faisant avancer, selon un mouvement horizontal rectiligne, la ou les lames de raclage d'un bord de la surface de travail le long duquel a été amenée, sous forme de bourrelet, la masse de pâte à étaler, au bord opposé de celle-ci, en vue d'un étalement dudit bourrelet de pâte sur la surface de travail. Le mouvement de passe est ici perpendiculaire au plan de l'au moins une lame.

Dans un second mode de réalisation, on peut conduire le mouvement de passe en balayant la ou les lames de raclage selon un mouvement de pivotement autour d'un axe perpendiculaire à la surface de travail et positionné en un point de cette dernière.

On peut déterminer avantageusement la fréquence de vibration en fonction des caractéristiques rhéologiques de la pâte, la fréquence étant choisie pour diminuer la viscosité de la pâte.

On peut mettre au moins une lame en mouvement de vibration par un système d'excitateur mécanique ou piézoélectrique ou électromagnétique, les fréquences de vibration étant avantageusement de respectivement 1-200 Hz, de 500-5000 Hz ou de 100-1000 Hz suivant que le système est mécanique, piézoélectrique ou électromagnétique.

En particulier, on peut conduire le mouvement de vibration par un système d'excitateur mécanique à une fréquence de 1 à 100 Hz, en particulier de 35 à 55 Hz.

On peut conduire le mouvement de vibration sur une course de 0,1 à 5 mm.

On peut maintenir la ou les lames de raclage en tension entre deux ressorts pour modifier la fréquence propre du mouvement de vibration, permettant avantageusement à la ou aux lames de vibrer à la fréquence de résonance du système oscillant composé de la ou des lames, du ou des porte-lame éventuellement associés et desdits ressorts.

On peut régler la profondeur de pénétration dans la pâte du bord de raclage d'une lame ou de chaque lame.

On peut utiliser une seule lame de raclage, ou au moins deux lames de raclage parallèles entre elles, accolées ou espacées, les bords de raclage desdites lames étant disposés à des hauteurs échelonnées, le bord de raclage de la lame d'attaque étant le plus élevé par rapport à la surface de travail, les fréquences de vibration desdites lames pouvant être différentes.

Conformément à un mode de réalisation particulier de mise en oeuvre du procédé de fabrication des pièces selon l'invention :
(a) sur un plateau de travail, on amène une masse de pâte à étaler, puis on étale par raclage à l'aide de la ou des lames de raclage, selon une direction horizontale, ou direction de passe, une première couche de ladite pâte ;
(b) on fait durcir la zone désirée de ladite première couche par irradiation selon un motif préalablement défini pour ladite couche, formant une première couche durcie dans la zone désirée ;
(c) sur la totalité de ladite première couche durcie dans la zone désirée, on étale une deuxième couche de pâte, par raclage à l'aide de la ou des lames de raclage, selon la direction de passe ;
(d) on fait durcir la zone désirée de la deuxième couche de pâte par irradiation selon un motif préalablement défini pour ladite couche, formant sur la première couche une deuxième couche durcie dans la zone désirée ;
(e) on répète la succession des étapes d'étalement d'une couche de pâte et de durcissement des zones désirées de chaque couche autant de fois que nécessaire jusqu'à l'obtention de la pièce,
où, lors de l'étalement d'au moins l'une des couches de pâte, on amène la ou les lames de raclage en position de travail à se déplacer en va-et-vient selon un mouvement de vibration dans une direction horizontale perpendiculaire à la direction de passe.

L'invention porte également sur une machine de fabrication de pièces crues en matériau céramique par la technique des procédés additifs suivant laquelle des couches d'une pâte photodurcissable sont amenées successivement à durcir par irradiation selon un motif défini pour chaque couche, ladite machine comprenant :
- un bâti encadrant un plateau de travail horizontal comportant une surface de travail ;
- un portique muni d'au moins une lame de raclage, le portique étant apte à se déplacer sur le bâti au-dessus du plateau de travail de telle sorte que le bord libre de la ou des lames de raclage est apte à étaler par raclage des couches de pâte sur la surface de travail, lesdites couches étant superposées verticalement ;
- des moyens d'irradiation en regard du plateau de travail pour irradier chaque couche une fois étalée pour la faire durcir dans le motif préalablement défini avant d'étaler la couche suivante, laquelle est à son tour durcie dans le motif défini,
caractérisée par le fait que la ou les lames sont montées coulissantes en va-et-vient dans leur plan pour assurer un mouvement de va-et-vient dit de vibration lors d'au moins une passe du portique selon la direction de passe sur la surface de travail.

Cette machine est notamment destinée à la mise en oeuvre du procédé tel que défini ci-dessus.

La ou les lames sont avantageusement déplaçables verticalement.

La machine peut comporter un ou plusieurs porte-lame, chacun portant au moins une lame et étant déplaçable verticalement sur le portique, le ou les porte-lame pouvant être maintenu(s) et déplacé(s) dans une position haute, relevée au-dessus du plateau de travail. On peut notamment disposer une ou plusieurs lames sur un porte-lame ou prévoir un porte-lame par lame.

Le ou chaque porte-lame peut comporter au moins un rail horizontal et la ou chaque lame peut comporter au moins un patin pour son guidage sur l'au moins un rail.

La machine peut comporter avantageusement un dispositif d'excitation du mouvement de vibration de la ou des lames par un système mécanique ou piézoélectrique ou électromagnétique.

Conformément à un premier mode de réalisation, le dispositif d'excitation est un mécanisme d'excitation à excentrique et comporte un ensemble constitué par un moteur et un disque entraîné par le moteur soit directement soit par l'intermédiaire d'une courroie selon un axe de rotation excentré, l'axe de rotation excentré étant disposé suivant la direction de passe.

Conformément à un deuxième mode de réalisation, le dispositif d'excitation est un mécanisme comportant un ensemble constitué par un moteur, une manivelle et une bielle reliée à une extrémité à la face avant de la lame ou des lames et à l'autre extrémité à la manivelle entraînée par le moteur selon un axe de rotation excentré, ledit axe de rotation excentré étant disposé suivant la direction de passe, ladite bielle se déplaçant dans le plan de la lame ou des lames.

Conformément à un troisième mode de réalisation, le dispositif d'excitation est un mécanisme comportant un ensemble constitué par un moteur et une came en contact avec une lame, ladite came, entraînée par le moteur selon un axe de rotation excentré, roulant, lors de son mouvement de rotation, en glissant contre la lame ou les lames et lui ou leur conférant le mouvement de va-et-vient.

Dans les trois modes de réalisation précités, le moteur peut être régulé par la commande de la machine, étant avantageusement régulé en tension pour assurer la fréquence recherchée pour le mouvement de vibration. A titre d'exemple, on peut citer une vitesse de moteur de 3000 tours/min produisant une fréquence de 50 Hz.

Conformément à un quatrième mode de réalisation, le mécanisme d'excitation est un système d'excitateur piézoélectrique.

Conformément à un cinquième mode de réalisation, le mécanisme d'excitation est un système d'excitateur électromagnétique.

La machine peut aussi comporter avantageusement des moyens de rappel élastique de la lame ou des lames selon une direction perpendiculaire à la direction de passe.

La machine selon l'invention peut comporter une seule lame ou au moins deux lames, lesquelles sont parallèles entre elles, accolées ou espacées, avec un dispositif d'excitation commun du mouvement de vibration ou un dispositif d'excitation associé à chacune d'elles.

Le porte-lame ou les porte-lame peut ou peuvent comporter des roulettes lui ou leur permettant de rouler sur le bâti.

Les moyens d'irradiation peuvent être constitués, à titre d'exemple non limitatif, par un laser, des diodes laser, un éclairage UV...

Pour mieux illustrer l'objet de la présente invention, on va en décrire ci-après, à titre indicatif et non limitatif, plusieurs modes de réalisation avec référence au dessin annexé.

Sur ce dessin :
- les Figures 1 à 6 sont des vues schématiques en perspective illustrant les différentes positions prises, lors d'un cycle d'étalement par raclage d'une couche de pâte, par un dispositif de raclage conforme à un premier mode de réalisation d'une machine de fabrication de corps frittés par la technique des procédés additifs couche par couche ; le mécanisme de déplacement en translation dans son plan de la lame de raclage a été omis sur ces figures pour ne pas les surcharger ;
- la Figure 7 est, à plus grande échelle et sous le même angle que les Figures 1 à 6, une vue en perspective dudit mécanisme de déplacement en translation de la lame de raclage, lequel est monté sur cette dernière et sur le porte-lame ;
- la Figure 8 est, encore à plus grande échelle, une vue de face correspondant à la Figure 7 ;
- les Figures 9 et 10 sont des vues en coupe selon respectivement IX-IX et X-X de la Figure 8, la Figure 10 étant à plus grande échelle ;
- la Figure 11 est une vue latérale selon la flèche XI de la Figure 8 ;
- la Figure 12 est une vue de dessus correspondant à la Figure 8 ;
- la Figure 13 est une vue analogue à la Figure 1 mais sur laquelle figure le mécanisme de déplacement transversal de la lame de raclage sur son porte-lame conformément à un deuxième mode de réalisation ;
- la Figure 14 est une vue en perspective d'une triple lame de raclage ;
- la Figure 15 est une vue de face correspondant à la Figure 14 ;
- la Figure 16 est une vue en coupe selon XVI-XVI de la Figure 15 ;
- la Figure 17 est une vue de dessus correspondant à la Figure 15 ; et
- la Figure 18 est une vue analogue à la Figure 2 illustrant un montage qui comporte deux lames de raclage à chacune desquelles sont associés un moyen d'excitation du mouvement de vibration et des moyens de rappel élastique.

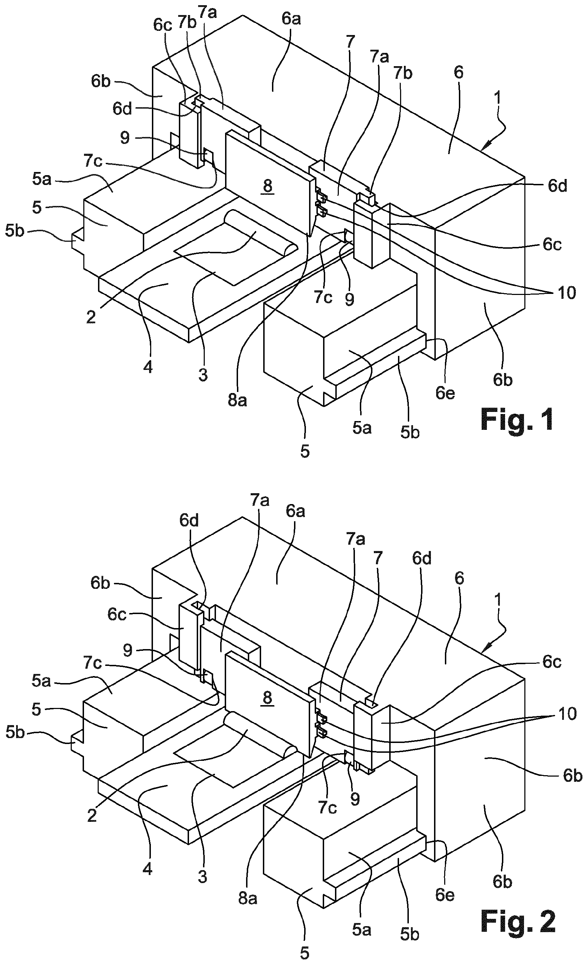

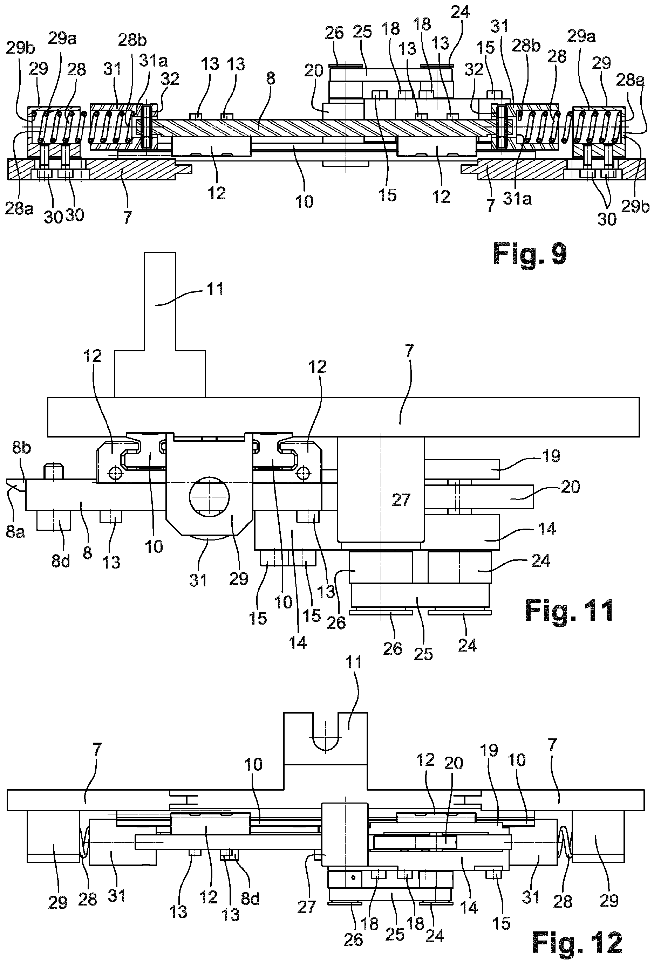

Si l'on se réfère aux Figures 1 et 7 à 12, on peut voir que l'on a représenté un dispositif 1 de raclage d'une couche de pâte 2 sur une surface de travail 3 d'un plateau de travail horizontal 4 d'une machine de fabrication de corps crus en matériau céramique par la technique des procédés additifs.

Le dispositif de raclage 1, monté coulissant sur le bâti 5 de la machine, comporte, de l'arrière vers l'avant si l'on regarde la Figure 1, un portique 6, un porte-lame 7 monté coulissant verticalement à l'avant du portique 6, et une lame de raclage 8 ayant un bord de raclage horizontal, montée avec possibilité de déplacement horizontal transversal en va-et-vient par rapport au porte-lame 7.

Le bâti 5 comporte deux blocs allongés 5a situés de part et d'autre du plateau de travail 4, chacun de ces blocs 5a portant une nervure 5b qui s'étend horizontalement sur toute sa face latérale externe et dont le rôle est indiqué plus loin.

La portique 6 consiste en un bloc comportant une partie supérieure 6a en forme de parallélépipède rectangle se prolongeant par deux parties latérales inférieures 6b.

La face avant de la partie supérieure 6a porte, dans chacune de ses zones de jonction avec chacune des parties latérales 6b, une saillie 6c de section en U dont une aile est accolée à la face avant de la partie 6a, les rainures 6d de ces sections en U étant disposées en regard l'une de l'autre. Le rôle de ces rainures 6d est indiqué plus loin.

Au voisinage de sa base, chaque partie latérale 6b comporte, tournée vers l'intérieur, une rainure 6e dans laquelle le bloc 5a associé du bâti 5 est apte à coulisser par sa nervure correspondante 5b.

Le porte-lame 7 consiste en une plaque en U dont les parties latérales portent le chiffre de référence 7a et qui sont disposées parallèlement à la face avant du bloc 6a du portique 6, une nervure 7b étant portée par le chant extérieur du porte-lame 7 permettant le coulissement de cette dernière dans la rainure 6d associée du portique 6. Le porte-lame 7 pourrait tout aussi bien être une plaque complète.

Sur la Figure 1, on peut également voir qu'une échancrure 7c est pratiquée dans la base de chaque plaque 7a du porte-lame 7, chaque échancrure servant de logement à une roulette 9 cylindrique apte à tourner autour d'un axe horizontal. Ces roulettes 9 sont disposées à une hauteur telle qu'elles viendront rouler sur la partie supérieure des blocs 5a respectifs du bâti 5 lorsque le porte-lame 7 est abaissé. Elles permettent de maintenir à une bonne hauteur le porte-lame 7 par rapport au bâti 5. On peut cependant noter qu'elles sont facultatives.

La lame de raclage 8 comporte un bord inférieur 8a chanfreiné.

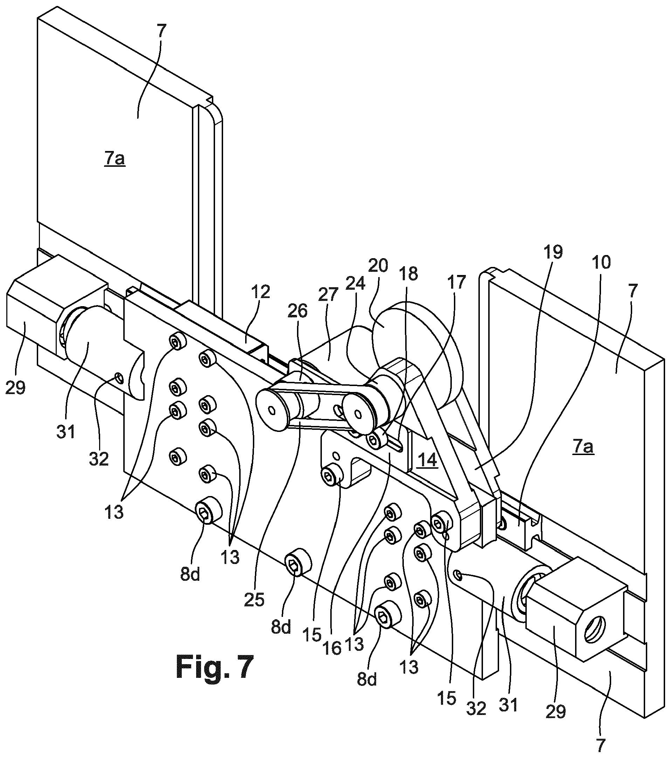

Sur la Figure 1, on peut également voir les glissières ou rails 10 solidaires du porte-lame 7, lesquels seront décrits avec référence à la Figure 7.

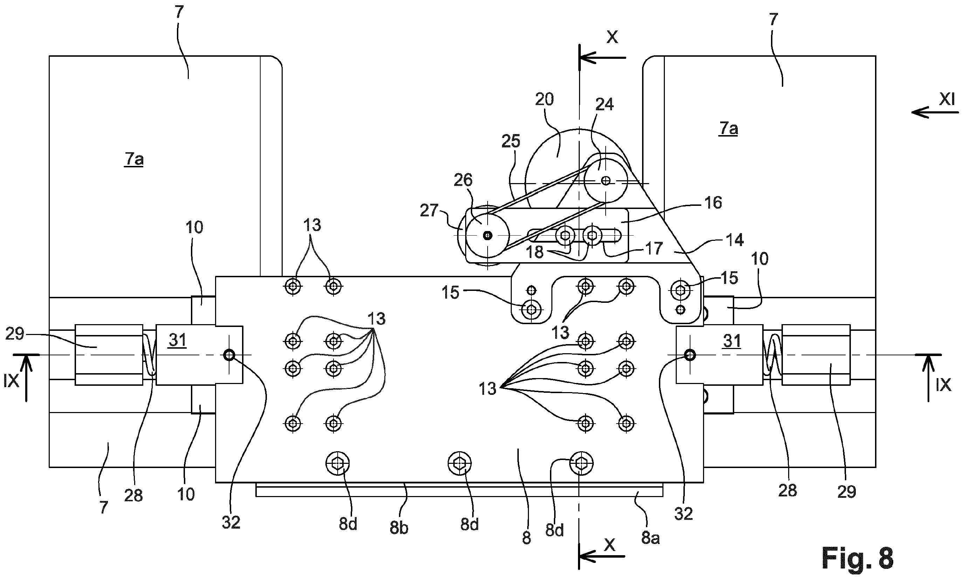

Si l'on se réfère maintenant aux Figures 8, 10 et 11, on peut voir que le bord de coupe 8a chanfreiné de la lame de coupe 8 fait partie d'une bande mince inférieure 8b, qui est appliquée contre la face intérieure de la lame 8 présentant un décrochement vers l'intérieur correspondant 8c et qui est fixée à ladite lame 8 par des vis 8d.

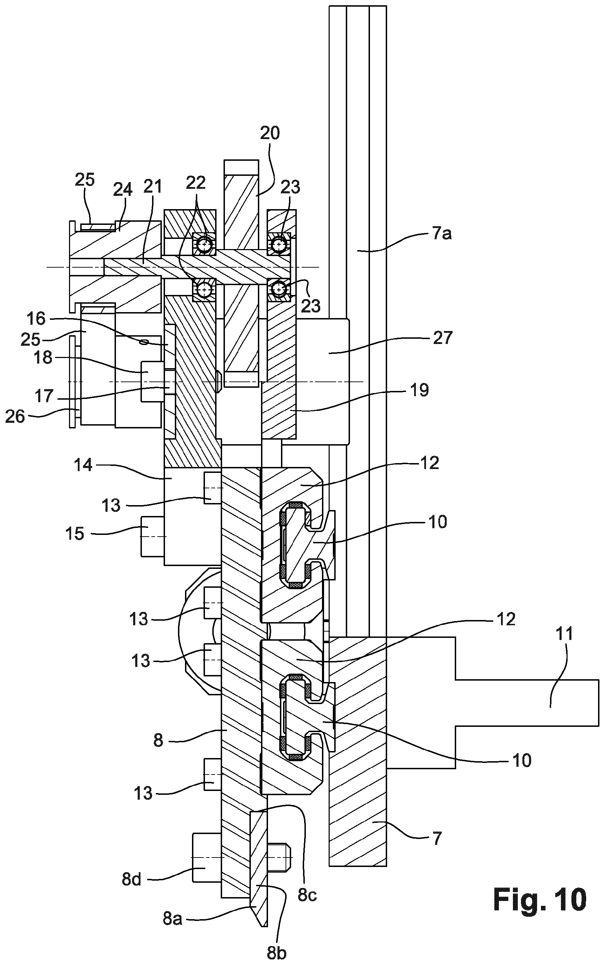

Sur les Figures 10, 11 et 12, on a également représenté schématiquement le système d'accroche 11 à une motorisation qui est associée au porte-lame 7 et dont l'actionnement permet de faire monter et descendre le porte-lame 7 dans les conditions qui seront décrites ci-après.

Si l'on se réfère maintenant aux Figures 7 à 11, on peut voir que deux rails de guidage 10 horizontaux sont solidaires du porte-lame 7, sur sa face avant et dans sa partie inférieure.

Quatre patins 12 sont rendus solidaires de la face arrière de la lame de raclage 8 par des vis 13, dans des positions leur permettant de coulisser dans les rails respectifs 10 lors du mouvement de vibration de la lame de raclage 8 qui sera décrit ci-après.

Le mécanisme de déplacement en translation de la lame 8 sur son porte-lame 7 va maintenant être décrit.

Un premier support 14 de forme triangulaire est appliqué contre la face avant de la lame 8 à la partie supérieure de celle-ci, d'un côté (le côté droit si l'on regarde les Figures 7 et 8), et fixé à ladite lame 8 par sa base à l'aide de deux vis 15, la partie de pointe supérieure dudit support dépassant au-dessus de la lame 8.

Contre la face extérieure du support 14, est appliquée et fixée une plaque allongée 16 qui dépasse d'un côté du support 14 (sur la gauche si l'on regarde les Figures 7 et 8). Dans cette plaque 16, est pratiquée un trou allongé oblong 17, d'axe horizontal, traversé perpendiculairement par deux vis de réglage 18, dont le rôle est indiqué plus loin.

Un deuxième support 19, de même forme que le premier support 14, est appliqué contre la face arrière de la lame 8, pour être face audit premier support 14.

Une roue à excentrique 20 est montée entre les parties supérieures en pointe des deux supports 14 et 19, au-dessus de la lame de raclage 8, l'axe excentré 21 de ladite roue 20 tournant dans des roulements respectivement 22 et 23.

L'axe 21 fait saillie à l'avant de la plaque 14 et y reçoit une poulie crantée 24 sur laquelle passe une courroie crantée 25, laquelle passe sur une poulie crantée 26 associée à un moteur 27.

Par ailleurs, si l'on se réfère aux Figures 7, 8 et 9, on peut voir que de chaque côté de la lame 8 est disposé un ressort hélicoïdal 28.

Chaque ressort hélicoïdal 28 est introduit, par sa région d'extrémité 28a opposée à la lame 8, dans un alésage cylindrique 29a d'une cage 29 montée par des vis 30 sur le porte-lame 7, l'extrémité du ressort 28 venant en butée contre le fond 29b de l'alésage 29a.

La région d'extrémité 28b voisine de la lame 8 vient en butée contre le fond 31a d'un alésage cylindrique 31b d'une cage cylindrique 31 dont la région d'extrémité opposée à la cage 29 vient coiffer la région d'extrémité correspondante de la lame 8 pour y être fixée par une vis 32.

Pour mettre en marche l'excitation pour le mouvement de vibration de la lame 8, on actionne le moteur 27 qui entraîne la courroie crantée 25, dont la tension a été réglée par les vis de réglage 18 et laquelle entraîne en rotation la roue 20 à excentrique, ce qui crée un mouvement de translation alternatif de la lame 8 dans son plan. Les ressorts 28 maintiennent la lame 8 en tension entre eux afin de modifier la fréquence propre du système vibrant, permettant de répondre au mieux au comportement de la pâte.

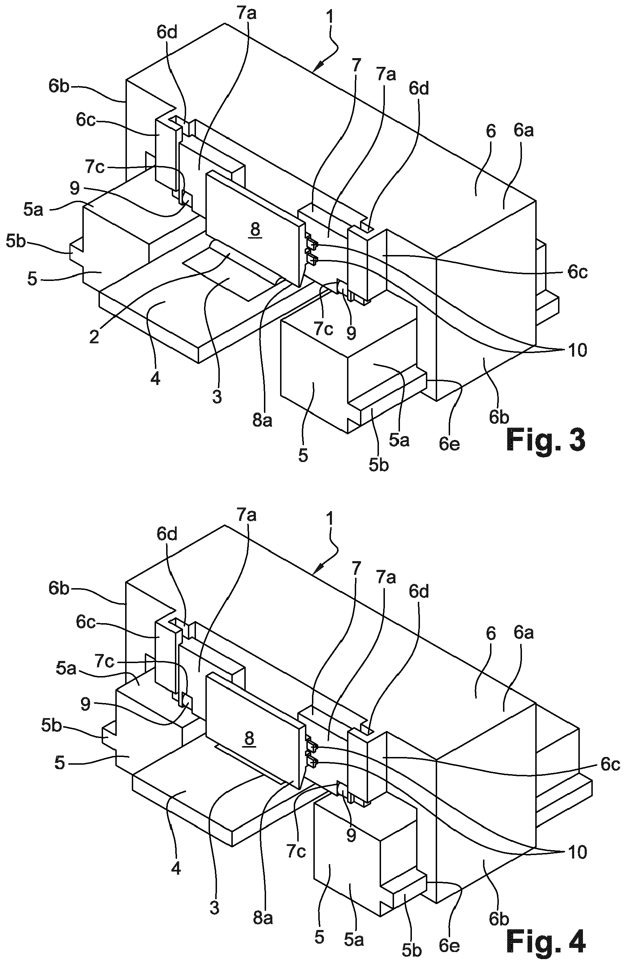

On va maintenant décrire un cycle d'étalement d'une couche de pâte par raclage avec référence aux Figures 1 à 6.

### Figure 1

Le dispositif de raclage est au repos. La lame de raclage 8 est relevée et immobile.

### Figure 2

La lame de raclage 8 est descendue et arrêtée lorsque la hauteur de couche désirée est bonne.

### Figure 3

La pâte est étalée par avance de la lame de raclage, laquelle est pendant cette avance soumise à l'excitation pour le mouvement de vibration, comme décrit ci-dessus.

### Figure 4

La lame de raclage est presque arrivée à la fin de sa course.

### Figure 5

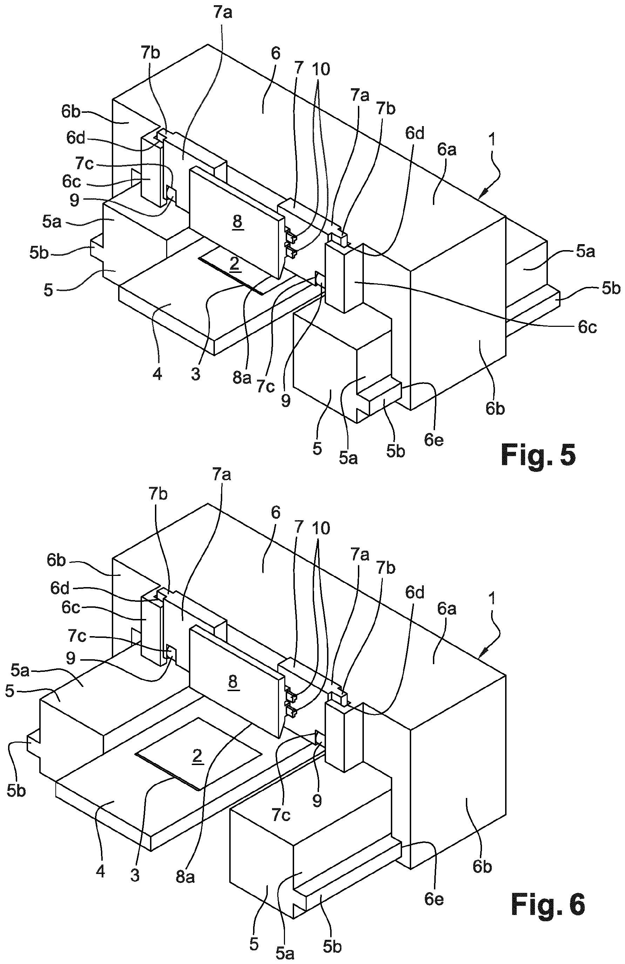

La lame de raclage est alors soulevée pour être dégagée de la pâte et elle est de retour à la position de repos de la Figure 6.

On constate que l'étalement de la pâte à chaque passe est réalisé de façon parfaitement homogène, la pièce obtenue s'étant révélée satisfaisante.

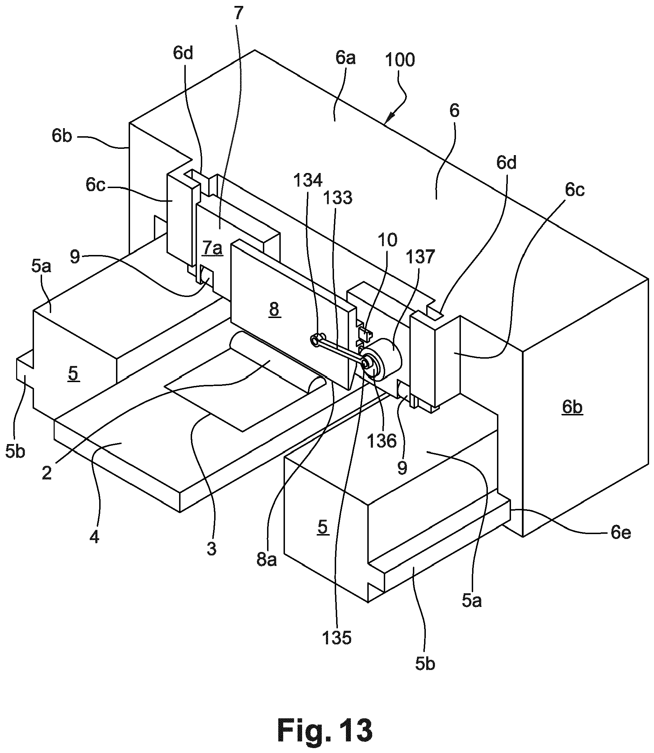

Si l'on se réfère à la Figure 13, on peut voir que l'on a représenté schématiquement un autre mode de réalisation du mécanisme de vibration de la lame 8 par rapport au porte-lame 7. Une bielle 133 est fixée d'une part à une position 134 sur la lame 8 et d'autre part à une position excentrée 135 d'une manivelle 136 entraînée en rotation par un moteur 137 dont l'axe est fixé sur le porte-lame 7, d'un côté de celui-ci (côté droit si l'on regarde la Figure 13).

Pour mettre en marche l'excitation pour le mouvement de vibration de la lame 8, on actionne le moteur 137 qui met en marche le système bielle-manivelle, ce qui crée un mouvement de translation alternatif de la lame 8 sans son plan

On peut noter que le mécanisme de vibration des Figures 7 et 13 pourrait être remplacé par un excitateur piézoélectrique ou électromagnétique logé dans un boîtier à monter sur la lame 8.

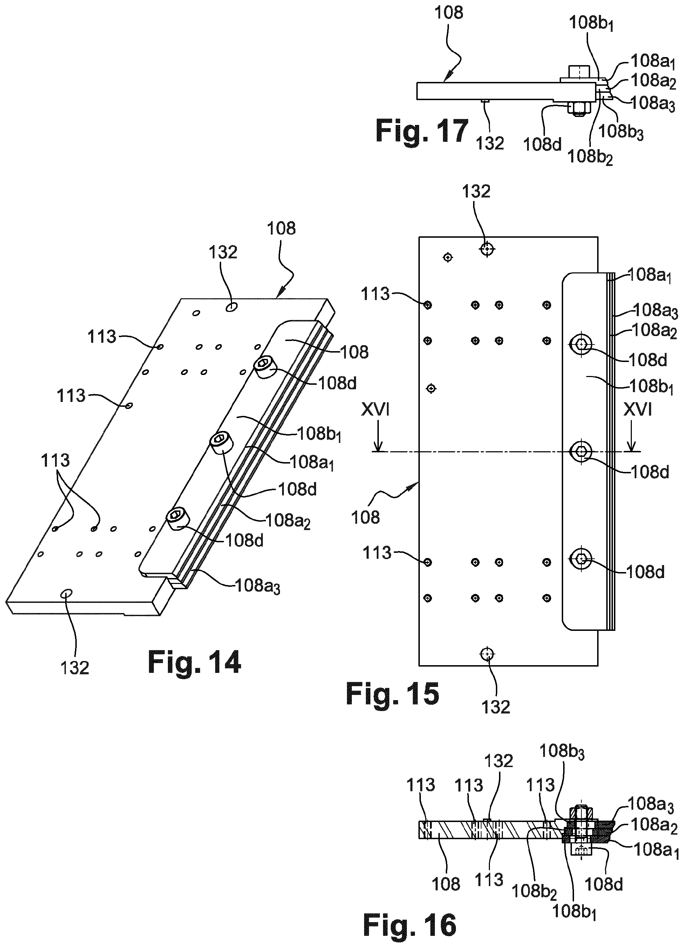

Si l'on se réfère aux Figures 14 à 17, on peut voir que l'on a représenté une triple lame 108 qui est une variante de réalisation de la lame 8 précédemment définie et dont les éléments portent des chiffres de référence supérieurs de 100 à ceux des éléments respectifs de la lame 8. En fait, ce sont les bandes minces inférieures qui sont maintenant au nombre de trois (108b₁, 108b₂ et 108b₃), appliquées l'une contre l'autre, portant les bords de coupe respectivement 108a₁, 108a₂ et 108a₃, et disposées sur la lame 108 à des hauteurs différentes de telle sorte que le bord avant 108a₁ pénètre moins profondément dans la masse de pâte à étaler que le bord suivant 108a₂, lui-même pénétrant moins profondément dans la masse de pâte à étaler que le bord 108a₃.

Il est alors plus aisé d'étaler la pâte, car la force à appliquer sur chacune des lames lors du raclage est moindre que dans le cas d'une seule lame.

Le montage des Figures 14 à 17 ne représente qu'un exemple de montage, les bandes minces inférieures pouvant également être écartées l'une de l'autre ou encore les trois bords de lame pouvant appartenir à trois lames différentes et non plus à des bandes minces inférieures portées par une seule lame.

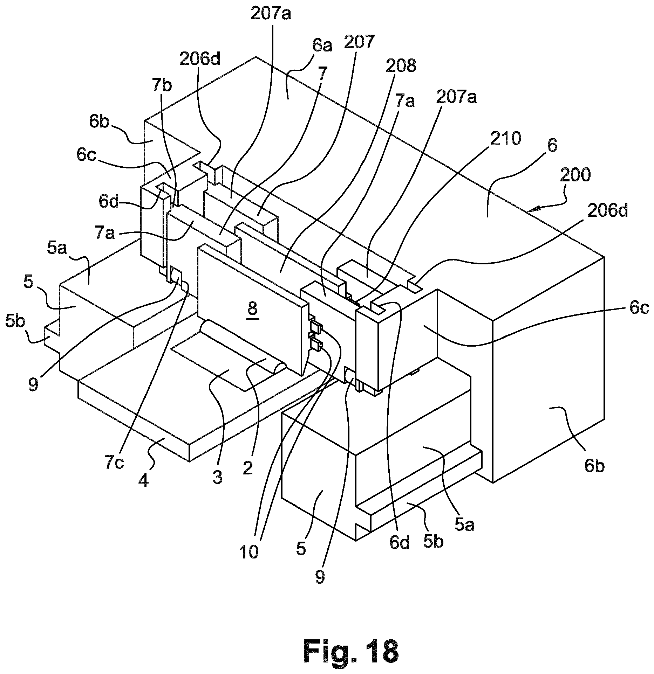

Si l'on se réfère à la Figure 18, on peut voir que l'on a représenté un dispositif 200 qui diffère du dispositif 1 des Figures 1 à 6 par le fait qu'il comporte deux lames de raclage 8, 208 au lieu d'une.

Sur la Figure 18, on a désigné par les mêmes chiffres de référence les éléments communs à ceux du dispositif 1 et on ne décrira ci-après que les différences.

Chaque partie en saillie 6c du portique 6 est allongée pour comporter une seconde rainure 206d parallèle à la rainure 6d et située à l'arrière de celle-ci dans l'exemple représenté.

Dans ce rainures 206d coulisse un second porte-lame 207 identique au porte-lame 7, dont on peut voir les parties latérales 207a aptes à coulisser dans les rainures 206d.

Le porte-lame 207 peut avantageusement comporter des roulettes analogues aux roulettes 9 pour rouler sur le bâti 5.

La seconde lame de raclage 208, dont la hauteur est telle qu'elle pénétrera plus profondément dans la pâte que la lame 8, est montée sur les parties latérales 207a du porte-lame 7 et vient se situer entre les parties latérales 7a et 207a. Comme la lame 8, elle comporte des patins aptes à coulisser dans des rails 210 du porte-lame 207.

La lame 208 est susceptible de se déplacer en va-et-vient pour le mouvement de vibration sous l'action des mêmes moyens d'excitation que ceux précédemment décrits, de tels moyens n'ayant pas été représentés sur la Figure 18, de même que les moyens de rappel élastique analogues à ceux de ladite lame 8. Ainsi, l'excitation du mouvement de vibration des deux lames 8, 208 est réglable de manière indépendante.

Le fonctionnement du dispositif 200 est sinon le même que celui du dispositif 1, les deux lames 8 et 208 avançant simultanément dans le mouvement d'avance de passe tout en étant soumises au mouvement de vibration.

## Revendications

1. Procédé de fabrication d'une pièce crue en matériau céramique par la technique des procédés additifs suivant laquelle des couches d'une pâte photodurcissable (2) sont amenées successivement à durcir par irradiation selon un motif défini pour chaque couche, la première couche étant formée sur une surface de travail (3) sur un plateau de travail (4), chaque couche étant, avant son durcissement selon un motif défini, étalée par raclage à partir d'une masse de pâte amenée sur ledit plateau de travail (4), lequel est abaissé à chaque formation de couche, **caractérisé par le fait que**, lors de l'étalement d'au moins l'une des couches de pâte photodurcissable, on amène au moins une lame de raclage en position de travail, en plus de son mouvement de raclage (8 ; 108 ; 208) ou mouvement dit de passe, à se déplacer en va-et-vient dans son plan, selon un mouvement dit de vibration horizontal et orthogonal au précédent.

2. Procédé selon la revendication 1, **caractérisé par le fait que** l'on conduit le mouvement de passe en faisant avancer, selon un mouvement horizontal rectiligne, la ou les lames de raclage (8 ; 108 ; 208) d'un bord de la surface de travail (3) le long duquel a été amenée, sous forme de bourrelet, la masse de pâte (2) à étaler, au bord opposé de celle-ci, en vue d'un étalement dudit bourrelet de pâte (2) sur la surface de travail (3).

3. Procédé selon la revendication 1, **caractérisé par le fait que** l'on conduit un mouvement de passe en balayant la ou les lames de raclage selon un mouvement de pivotement autour d'un axe perpendiculaire à la surface de travail et positionné en un point de cette dernière.

4. Procédé selon l'une des revendications 1 à 3, **caractérisé par le fait que** l'on détermine la fréquence de vibration en fonction des caractéristiques rhéologiques de la pâte (2), la fréquence étant choisie pour diminuer la viscosité de la pâte.

5. Procédé selon l'une des revendications 1 à 4, **caractérisé par le fait que** l'on met au moins une lame de raclage (8 ; 108 ; 208) en mouvement de vibration par un système d'excitateur mécanique ou piézoélectrique ou électromagnétique, les fréquences de vibration étant avantageusement de respectivement 1-200 Hz, de 500-5000 Hz ou de 100-1000 Hz suivant que le système est mécanique, piézoélectrique ou électromagnétique.

6. Procédé selon la revendication 5, **caractérisé par le fait que** l'on conduit le mouvement de vibration par un système d'excitateur mécanique à une fréquence de 1 à 100 Hz, notamment de 35 à 55 Hz.

7. Procédé selon l'une des revendications 1 à 6, **caractérisé par le fait que** l'on conduit le mouvement de vibration sur une course de 0,1 à 5 mm.

8. Procédé selon l'une des revendications 1 à 7, **caractérisé par le fait que** l'on maintient la ou les lames de raclage (8 ; 108 ; 208) en tension entre deux ressorts (28) pour modifier la fréquence propre du mouvement de vibration, permettant avantageusement à la ou aux lames de vibrer à la fréquence de résonance du système oscillant composé de la ou des lames (8 ; 108 ; 208), du ou des porte-lame associés et desdits ressorts (28).

9. Procédé selon l'une des revendications 1 à 6, **caractérisé par le fait que** l'on règle la profondeur de pénétration de la pâte du bord de raclage d'une lame ou de chaque lame (8 ; 108 ; 208).

10. Procédé selon l'une des revendications 1 à 9, **caractérisé par le fait que** l'on utilise une seule lame de raclage (8), ou au moins deux lames de raclage (108 ; 208) parallèles entre elles, accolées ou espacées, les bords de raclage desdites lames (108 ; 208) étant disposés à des hauteurs échelonnées, le bord de raclage (8) de la lame d'attaque étant le plus élevé par rapport à la surface de travail (3), les fréquences de vibration desdites lames (108 ; 208) pouvant être différentes.

11. Procédé selon l'une des revendications 1 à 10, **caractérisé par le fait que** :
(a) sur un plateau de travail (4), on amène une masse de pâte (2) à étaler, puis on étale par raclage à l'aide de la ou des lames de raclage (8 ; 108 ; 208), selon une direction horizontale, ou direction de passe, une première couche de ladite pâte (2) ;
(b) on fait durcir la zone désirée de ladite première couche par irradiation selon un motif préalablement défini pour ladite couche, formant une première couche durcie dans la zone désirée ;
(c) sur la totalité de ladite première couche durcie dans la zone désirée, on étale une deuxième couche de pâte (2), par raclage à l'aide de la ou des lames de raclage (8 ; 108 ; 208), selon la direction de passe ;
(d) on fait durcir la zone désirée de la deuxième couche de pâte par irradiation selon un motif préalablement défini pour ladite couche, formant sur la première couche une deuxième couche durcie dans la zone désirée ;
(e) on répète la succession des étapes d'étalement d'une couche de pâte (2) et de durcissement des zones désirées de chaque couche autant de fois que nécessaire jusqu'à l'obtention de la pièce,
où, lors de l'étalement d'au moins l'une des couches de pâte (2), on amène la ou les lames de raclage (8 ; 108 ; 208) en position de travail à se déplacer en va-et-vient selon un mouvement de vibration dans une direction horizontale perpendiculaire à la direction de passe.

12. Machine de fabrication de pièces crues en matériau céramique par la technique des procédés additifs suivant laquelle des couches d'une pâte photodurcissable sont amenées successivement à durcir par irradiation selon un motif défini pour chaque couche, ladite machine comprenant :
- un bâti (5) encadrant un plateau de travail (4) horizontal comportant une surface de travail (3) ;
- un portique (6) muni d'au moins une lame de raclage (8 ; 108 ; 208), le portique (6) étant apte à se déplacer sur le bâti (5) au-dessus du plateau de travail (4) de telle sorte que le bord libre (8a) de la ou des lames de raclage (8 ; 108 ; 208) est apte à étaler par raclage des couches de pâte (2) sur la surface de travail (4), lesdites couches étant superposées verticalement ;
- des moyens d'irradiation en regard du plateau de travail (4) pour irradier chaque couche une fois étalée pour la faire durcir dans le motif préalablement défini avant d'étaler la couche suivante, laquelle est à son tour durcie dans le motif défini,
**caractérisée par le fait que** la ou les lames (8 ; 208 ; 208) sont montées coulissantes en va-et-vient dans leur plan pour assurer un mouvement de va-et-vient dit de vibration lors d'au moins une passe du portique (6) selon la direction de passe sur la surface de travail (4).

13. Machine selon la revendication 12, **caractérisée par le fait qu'**elle comporte un ou plusieurs porte-lame (7 ; 207), chacun portant au moins une lame (8 ; 108 ; 208) et étant déplaçable verticalement sur le portique (6), le ou les porte-lame (7 ; 207) pouvant être maintenu(s) et déplacé(s) dans une position haute, relevée au-dessus du plateau de travail (4).

14. Machine selon la revendication 13, **caractérisée par le fait que** le ou chaque porte-lame (7 ; 207) comporte au moins un rail horizontal (10 ; 210) et la ou chaque lame (8 ; 108 ; 208) comporte au moins un patin (12) pour son guidage sur l'au moins un rail (10 ; 210).

15. Machine selon l'une des revendications 12 à 13, **caractérisée par le fait qu'**elle comporte un dispositif d'excitation du mouvement de vibration de la ou des lames (8 ; 108 ; 208) par un système mécanique ou piézoélectrique ou électromagnétique.

16. Machine selon la revendication 15, **caractérisée par le fait que** le dispositif d'excitation est un mécanisme d'excitation à excentrique et comporte un ensemble constitué par un moteur (27) et un disque (20) entraîné par le moteur (27) soit directement soit par l'intermédiaire d'une courroie (25) selon un axe de rotation excentré, l'axe de rotation excentré étant disposé suivant la direction de passe.

17. Machine selon la revendication 15, **caractérisée par le fait que** le dispositif d'excitation est un mécanisme comportant un ensemble constitué par un moteur (137), une manivelle (136) et une bielle (133) reliée à une extrémité à la face avant de la lame ou des lames (8 ; 108 ; 208) et à l'autre extrémité à la manivelle (136) entraînée par le moteur (137) selon un axe de rotation excentré, ledit axe de rotation excentré étant disposé suivant la direction de passe, ladite bielle (133) se déplaçant dans le plan de la lame ou des lames (8 ; 108 ; 208).

18. Machine selon la revendication 15, **caractérisée par le fait que** le dispositif d'excitation est un mécanisme comportant un ensemble constitué par un moteur et une came en contact avec une lame, ladite came, entraînée par le moteur selon un axe de rotation excentré, roulant, lors de son mouvement de rotation, en glissant contre la lame ou les lames et lui ou leur conférant le mouvement de va-et-vient.

19. Machine selon l'une des revendications 16 à 18, **caractérisée par le fait que** le moteur est régulé par la commande de la machine, étant avantageusement régulé en tension pour assurer la fréquence recherchée pour le mouvement de vibration.

20. Machine selon l'une des revendications 15 à 19, **caractérisée par le fait qu'**elle comporte des moyens (28) de rappel élastique de la lame ou des lames (8 ; 108 ; 208) selon une direction perpendiculaire à la direction de passe.

21. Machine selon l'une des revendications 12 à 20, **caractérisée par le fait qu'**elle comporte une seule lame (8) ou au moins deux lames (108 ; 208), lesquelles sont parallèles entre elles, accolées ou espacées, avec un dispositif d'excitation commun du mouvement de vibration ou un dispositif d'excitation associé à chacune d'elles.

22. Machine selon l'une des revendications 13 à 21, **caractérisée par le fait que** le porte-lame ou les porte-lame (7 ; 207) comporte(nt) des roulettes (9) lui ou leur permettant de rouler sur le bâti (5).
